(19) **Europäisches Patentamt**
**European Patent Office**
**Office européen des brevets**

(11) Veröffentlichungsnummer: **0 326 782**
**A2**

(12) **EUROPÄISCHE PATENTANMELDUNG**

(21) Anmeldenummer: 88730212.3

(22) Anmeldetag: 14.09.88

(51) Int. Cl.⁴: **B60J 7/22**

(30) Priorität: 03.02.88 DE 8801478 U

(43) Veröffentlichungstag der Anmeldung:
09.08.89 Patentblatt 89/32

(84) Benannte Vertragsstaaten:
AT BE CH DE ES FR GB GR IT LI LU NL SE

(71) Anmelder: SEITEC FORMTEILE AUS
KUNSTSTOFF GMBH
Schlüterstrasse 39
D-1000 Berlin 12(DE)

(72) Erfinder: Seibert, Hendrik
Bartningallee 7
D-1000 Berlin 21(DE)

(74) Vertreter: Pfenning, Meinig & Partner
Kurfürstendamm 170
D-1000 Berlin 15(DE)

(54) **Windabweiser.**

(57) Es wird ein auf das Dach (1) eines Personenkraftwagens montierbarer Windabweiser (5) für eine Schiebedachöffnung (4) beschrieben. Dessen im montierten Zustand vordere Kante ist der Oberkante der Windschutzscheibe (2) des Personenkraftwagens für den unmittelbaren Ansatz an diese angepaßt. Vorzugsweise entspricht die Krümmung des sich an die vordere Kante anschließenden Bereiches des Windabweisers der Krümmung des Daches des Personenkraftwagens unmittelbar oberhalb der Winschutzscheibe. Weiterhin ist zweckmäßig, auf der Unterseite des Windabweisers parallel zu seiner vorderen Kante in geringem Abstand von dieser einen Magnetstriefen zu befestigen.

FIG. 1

EP 0 326 782 A2

## Windabweiser

Die Erfindung betrifft einen auf das Dach eines Personenkraftwagens montierbaren Windabweiser für eine Schiebedachöffnung.

Die bekannten derartigen Windabweiser sind derart ausgebildet, daß ihre vordere Kante im montierten Zustand kurz vor der Schiebedachöffnung liegt, d.h. diese Windabweiser erheben sich relativ abrupt von der Dachoberfläche. Dies ist strömungstechnisch ungünstig und bewirkt daher insbesondere bei hohen Geschwindigkeiten eine merkbare Zunahme des Kraftstoffverbrauches. Auch wirken große Kräfte auf den Windabweiser ein, so daß die Gefahr einer Ablösung vom Fahrzeugdach besteht.

Es ist daher die Aufgabe der vorliegenden Erfindung einen Windabweiser zu schaffen, der sich in aerodynamisch günstiger Weise auf dem Dach eines Personenkraftwagens montieren läßt.

Diese Aufgabe wird erindungsgemäß durch das im kennzeichnenden Teil des Anspruchs 1 angegebene Merkmal gelöst. Vorteilhaft Weiterbildungen des erfindungsgemäßen Windabweisers ergeben sich aus den Unteransprüchen.

Die Erfindung zeichnet sich dadurch aus, daß die im montierten Zustand vordere Kante des Windabweisers der Oberkante der Windschutzscheibe des Personenkraftwagens für den unmittelbaren Ansatz an diese angepaßt ist. Es besteht somit ein direkter Übergang von der Windschutzscheibe bzw. deren Umrandung zum Windabweiser ohne einen Dachzwischenbereich. Dadurch entfällt der aerodynamisch ungünstige Absatz zwischen dem Dach und dem Windabweiser.

Wenn die Krümmung des sich an die vordere Kante anschließenden Bereiches des Windabweisers der Krümmung des Daches des Personenkraftwagens unmittelbar oberhalb der Windschutzscheibe entspricht, dann bewirkt der Windabweiser aerodynamisch praktisch keine Änderung. Vorzugsweise ist auf der Unterseite des Windabweisers parallel zur vorderen Kante in geringem Abstand von dieser ein Magnetstreifen befestigt. Hierdurch wird die vordere Kante stets fest auf dem Fahrzeugdach gehalten, so daß der Fahrtwind nicht zwischen dieses und den Windabweiser gelangen kann. Zur weiteren Abdichtung trägt die vordere Kante des Windabweisers zweckmäßig eine Leiste aus elastischem Material.

Die Erfindung wird im folgenden anhand eines in den Figuren dargestellten Ausführungsbeispiels näher beschrieben. Es zeigen:

Fig. 1 in schematischer Darstellung eine perspektivische Ansicht des oberen vorderen Teils eines Personenkraftwagens,

Fig. 2 in schematischer Darstellung die Draufsicht auf den Teil nach Fig. 1,

Fig. 3 einen Windabweiser in schematischer Schnittdarstellung, und

Fig. 4 die Befestigung des Windabweisers am Dach des Personenkraftwagens.

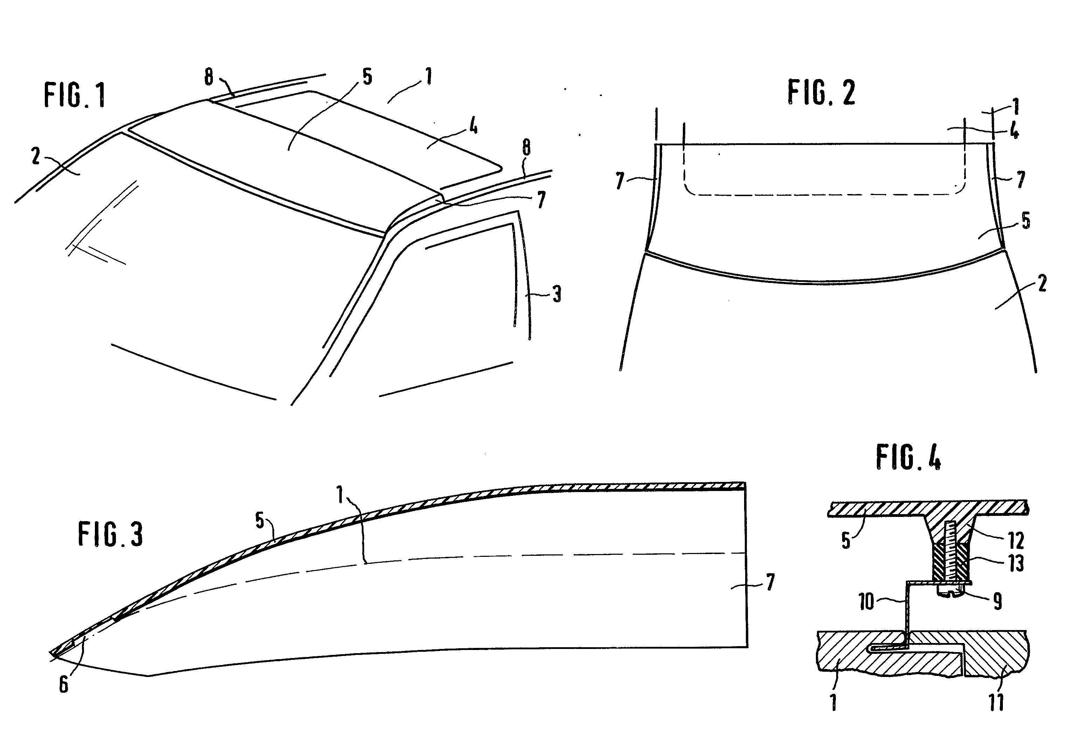

In Fig. 1 sind schematisch ein Dach 1, eine Windschutzscheibe 2 und eine Tür 3 eines Personenkraftwagens angedeutet. Im Dach 1 befindet sich eine Öffnung 4, in die in bekannter Weise ein Schiebedach eingesetzt ist. Der vordere Teil der Öffnung 4 etwa bis zu deren Mitte ist durch einen fest montierten Windabweiser 5 abgedeckt. Dessen vordere Kante ist unmittelbar oberhalb der Windschutzscheibe 2 angesetzt, wobei der aus Fig. 1 ersichtliche Zwischenraum durch die nicht näher dargestellte Einfassung der Windschutzscheibe 2 und eine ebenfalls nicht dargestellt Leiste aus Gummi oder dergleichen elastischem Material überbrückt ist. Die Einfassung und die Leiste gehen praktisch absatzlos ineinander über.

Wie Fig. 3, in der die strichlierte Linie den Verlauf der Dachoberfläche in der Dachmitte andeutet, zeigt, haben das Dach 1 und der Windabweiser 5 von der Vorderkante ausgehend zunächst die gleiche Krümmung, so daß durch die Anbringung des Windabweisers 5 aerodynamisch praktisch keine Veränderung eintritt. Der Windabweiser 5 hebt sich im weiteren Verlauf langsam von der Dachoberfläche ab, so daß an der Hinterkante ein Abstand von etwa 3 cm zwischen ihnen besteht.

Insbesondere aus Fig. 2 ist erkennbar, daß die Vorderkante des Windabweisers 5 den gleichen Verlauf nimmt wie die Oberkante der Windschutzscheibe 2, so daß der absatzlose Übergang zwischen ihnen mühelos erreicht werden kann.

Der Windabweiser 5 besitzt auf seiner Unterseite dicht an der Vorderkante eine zu dieser parallel verlaufende Nut 6, in die ein Magnetstreifen eingeklebt ist. Derartige kunststoffummantelte selbstklebende Magnetstreifen mit einer Magnetkraft von beispielsweise 80 g/cm$^2$ sind kommerziell erhältlich. Der Magnetstreifen liegt fest auf dem Dach 1 auf, so daß die Vorderkante des Windabweisers 5 mit großer Kraft gegen das Dach 1 gezogen wird.

Der Windabweiser 5 besitzt nach unten abgewinkelte Seitenflächen 7, die bis zur Dachoberfläche herunterreichen. Wenn, wie in Fig. 1 gezeigt ist, das Dach 1 an den Seiten durch Streifen 8 oder dergleichen abgesetzt ist, dann werden die Seitenflächen 7 direkt an diese Streifen 8 herangeführt, so daß die seitlichen Trennlinien zwischen dem Dach 1 und dem Windabweiser 5 verdeckt sind.

Der Windabweiser 5 kann in diesem Fall vorzugsweise im vorderen Bereich auch seitliche Vorsprünge aufweisen, die unter die Streifen 8 greifen und damit dem Windabweiser 5 weiteren Halt geben.

Die Befestigung des Windabweisers 5 erfolgt in der herkömmlichen Weise mittels Schrauben 9 an einer Halterung 10, die zwischen dem Dach 1 und dem Schiebedach 11 (Fig. 4) montiert ist. Nicht herkömmlich ist jedoch die Verwendung pfropfenartiger Vorsprünge 12 auf der Unterseite des Windabweisers 5 zu diesem Zweck. Die Vorsprünge 12 enthalten eine Gewindebohrung, in die die Schrauben 9 jeweils unter Einfügung einer Pufferscheibe 13 von unten eingeschraubt werden. Die Halterung 10 und die Vorsprünge 12 sind bei geöffnetem Schiebedach 11 zugänglich. Diese Art der Befestigung verhindert die Möglichkeit einer unbefugten Demontage des Windabweisers 5 von außen.

Der Windabweiser 5 besteht vorzugsweise aus faserverstärktem Kunststoff. Dies ermöglicht im Gegensatz zu den bisherigen Windabweisern aus Acrylglas eine Lackierung beispielsweise in der gleichen Farbe wie der des Personenkraftwagens.

## Ansprüche

1. Auf das Dach eines Personenkraftwagens montierbarer Windabweiser für eine Schiebedachöffnung,
**dadurch gekennzeichnet,**
daß seine im montierten Zustand vordere Kante der Oberkante der Windschutzscheibe (2) des Personenkraftwagens für den unmittelbaren Ansatz an diese angepaßt ist.

2. Windabweiser nach Anspruch 1, dadurch gekennzeichnet, daß die Krümmung des sich an die vordere Kante anschließenden Bereiches der Krümmung des Daches (1) des Personenkraftwagens unmittelbar oberhalb der Windschutzscheibe (2) entspricht.

3. Windabweiser nach Anspruch 1 oder 2, dadurch gekennzeichnet, daß auf seiner Unterseite parallel zur vorderen Kante in geringem Abstand von dieser ein Magnetstreifen befestigt ist.

4. Windaberweiser nach Anspruch 3, dadurch gekennzeichnet, daß der Magnetstreifen in einer Nut (6) angeordnet ist.

5. Windabweiser nach Anspruch 3 oder 4, dadurch gekennzeichnet, daß der Magnetstreifen kunststoffummantelt und durch Klebung befestigt ist.

6. Windabweiser nach einem der Ansprüche 1 bis 5, dadurch gekennzeichnet, daß seine vordere Kante eine Leiste aus elastischem Material trägt.

7. Windabweiser nach einem der Ansprüche 1 bis 6, dadurch gekennzeichnet, daß er heruntergezogene Seitenflächen (7) aufweist, die im montierten Zustand bis zur Dachoberfläche des Personenkraftwagens reichen.

8. Windabweiser nach einem der Ansprüche 1 bis 7, dadurch gekennzeichnet, daß er an der Unterseite pfropfenartigen Vorsprünge (12) für die Aufnahme der Schaftenden von Befestigungsschrauben (9) aufweist.

9. Windabweiser nach einem der Ansprüche 1 bis 8, dadurch gekennzeichnet, daß er im vorderen Bereich seitliche Vorsprünge aufweist.

10. Windabweiser nach einem der Ansprüche 1 bis 9, dadurch gekennzeichnet, daß er die Schiebedachöffnung (4) etwa bis zu deren Mitte überdeckt.

11. Windabweiser nach einem der Ansprüche 1 bis 10, dadurch gekennzeichnet, daß der Abstand zwischen seinem hinteren Ende und dem Dach (1) des Personenkraftwagens im montierten Zustand etwa 3 cm beträgt.

12. Windabweiser nach einem der Ansprüche 1 bis 11, dadurch gekennzeichnet, daß er aus faserverstärktem Kunststoff besteht.

FIG.1

8   5   1

2           4

8

7

3

FIG.2

1
4

7           7

5

2

FIG.3

5   1

7

6

FIG.4

5

12
13

10          9

1           11

EP 0 326 782 A2